# EUROPÄISCHE PATENTSCHRIFT

(11) **EP 0 947 449 B1**
(45) Veröffentlichungstag und Bekanntmachung des Hinweises auf die Patenterteilung: **28.05.2003**
(21) Anmeldenummer: 99104841.4
(22) Anmeldetag: 11.03.1999
(51) Int. Cl.: B65G 1/137

(54) **Verfahren zum Betrieb einer Anlage zum Zusammenstellen auftragsspezifischer Warengruppen sowie Anlage zur Durchführung des Verfahrens**
Process for operating an installation for forming commission specificgroups of goods and installation for carrying out the process
Procédé de fonctionnement d'une installation pour former des groupes d'articles commandés et installation pour la mise en oeuvre du procédé

(30) Priorität: 01.04.1998 DE 19814558
(43) Veröffentlichungstag der Anmeldung: 06.10.1999
(73) Patentinhaber: Quelle Aktiengesellschaft, 90762 Fürth (DE)
(72) Erfinder: Büschel, Steffan, 90762 Fürth (DE); Häussler, Jörg, 90480 Nürnberg (DE); Christ, Ferdinand, 91575 Windsbach (DE)
(74) Vertreter: Matschkur, Lindner Blaumeier Patent- und Rechtsanwälte

(56) Entgegenhaltungen:
- EP-A- 0 494 014
- DE-A- 19 610 594

## Beschreibung

Die Erfindung betrifft ein Verfahren zum Betrieb einer Anlage zum Zusammenstellen auftragsspezifischer Warengruppen, insbesondere einer Kommissionieranlage.

Derartige Anlagen kommen beispielsweise im Versandhandel zum Einsatz. Mit ihnen ist es möglich, weitgehend vollautomatisch die Waren eines Kundenauftrages zu kommissionieren und zusammenzustellen, so daß dies in Form einer dem Auftrag entsprechenden Warengruppe vorliegen und nach dem Zusammenstellen lediglich noch verpackt und verschickt werden müssen. Die betriebsweise bekannter Anlagen ist in der Regel derart, daß die jeweiligen Warenaufnahmen, in oder auf welche die Waren eines Auftrages zu geben sind, längs einer Förderstrecke an verschiedenen Übergabestellen vorbeitransportiert werden. An diesen Übergabestellen werden die im Lager kommissionierten Waren eines Auftrags bereitgestellt, so daß sie an die Warenaufnahme übergeben werden können. Sofern es sich bei dem Auftrag um eine "Singlebestellung" handelt, also lediglich ein Warenstück bestellt wird, wird dieses an einer bestimmten Übergabestelle, an welcher es aus dem Lager hintransportiert wurde, übergeben, wonach der Auftrag insoweit "abgearbeitet" ist. Im Falle einer mehrere Teile umfassenden Bestelllung können sämtliche Warenteile an einer einzigen Übergabestelle bereitgestellt werden, oder aber verteilt auf entsprechende mehrere Übergabestellen, wobei dies letztlich davon abhängig ist, wo im Lager die einzelnen Warenteile vorhanden sind und welche Übergabestelle die diesbezüglich nächste ist. Nachteilig ist bei dem bekannten Verfahren jedoch, daß eine Warenaufnahme, an welche bereits sämtliche den Auftrag bildenden Warenteile (eines oder mehrere) übergeben wurden, sämtliche nachfolgenden Übergabestellen passieren muß. Diese Warenaufnahme belegt damit einen Platz auf der Transportstrecke, ohne das dies erforderlich ist, da insoweit keine Warenübergabe mehr stattfindet. Müssen beispielsweise mehrere Singleaufträge abgearbeitet werden, und befinden sich die jeweiligen Artikel beispielsweise an der ersten Übergabestelle, so ist jede Warenaufnahme nach Passieren dieser Übergabestelle komplett belegt und durchläuft ohne jede weitere Behandlung die nachfolgenden Übergabestellen, an denen infolgedessen nicht gearbeitet werden kann.

Aus EP 0 494 014 ist ein Verfahren bekannt, bei dem einzelnen Warenaufnahmen ein Auftrag zugeordnet ist und die Warenaufnahmen an Übergabestellen vorbeitransportiert werden, wo Waren übergeben werden.

Der Erfindung liegt somit das Problem zugrunde, ein Verfahren anzugeben, welches eine Leistungssteigerung der Anlage ermöglicht, und eine bessere Ausnutzung und eine Erhöhung der Wirtschaftlichkeit zulässt.

Zur Lösung dieses Problems ist ein Verfahren der eingangs genannten Art mit folgenden Merkmalen vorgesehen:
a) den einzelnen Aufträgen sind Warenaufnahmen zugeordnet,
b) die Warenaufnahmen werden längs einer Transportstrecke an mehreren Übergabestellen vorbeitransportiert, an denen die auftragsspezifischen Waren bereitgestellt und an die Warenaufnahmen übergeben werden, wobei die Waren eines Auftrags an einer oder mehreren Übergabestellen übergeben werden können,
c) unmittelbar nach Komplettierung einer Warengruppe an einer Übergabestelle wird. die jeweilige Warenaufnahme zur weiteren Behandlung ausgeschleust,
d) in die innerhalb der Transportstrecke entlang der Übergabestellen entstan dene Lücke oder in eine aus der gleichzeitigen Behandlung mehrerer Warenaufnahmen resultierende Lücke wird eine neue Warenaufnahme eingeschleust, der ein Auftrag zugeordnet ist, dessen Waren an einer oder mehreren nachfolgenden Übergabestellen bereitgestellt und übergeben werden.

Das erfindungsgemäße Verfahren geht also ab von der starren Arbeitsweise, wonach sämtliche Warenaufnahmen, gleich ob sie bereits komplettiert sind oder nicht, zwíngend an sämtlichen Übergabestellen vorbeitransportiert werden. Vielmehr sieht das erfindungsgemäße Verfahren vorteilhaft vor, daß eine Warenaufnahme dann, wenn sie komplettiert ist, unmittelbar nach ihrer Komplettierung ausgeschleust wird und an eine Ausschleustransportstrecke überführt wird. Das heißt, es wird eine Lücke in der Transportstrecke geschaffen, in die erfindungsgemäß eine weitere Warenaufnahme eingeschleust wird, die an den nachfolgenden Übergabestellen mit den jeweiligen Waren belegt wird. Das heißt, eine fertige Warenaufnahme wird abgezogen und eine neue wird eingeführt. Auf diese Weise läßt sich mit besonderem Vorteil die Leistung und der Durchsatz der Anlage beachtlich erhöhen, da längs der Transportstrecke nur solche Warenaufnahmen gefördert werden, die auch tatsächlich zu bearbeiten sind.

Neben dem Einschleusen in eine aus einem Ausschleusvorgang entstehende Lücke können solche Lücken selbstverständlich auch dadurch entstehen, daß beispielsweise eine Warenaufnahme an der ersten Übergabestelle bearbeitet und anschließend sofort zur dritten Übergabestelle transportiert wird. An der ersten Übergabestelle wird währenddessen eine weitere Warenaufnahme mit Artikeln belegt. In die zwischen diesen beiden Warenaufnahmen entstehende Lücke kann ebenfalls eine neue Warenaufnahme eingeschleust werden. Ersichtlich ist das erfindungsgemäße Verfahren von hoher Flexibilität, so daß ein den tatsächlichen Erfordernissen, insbesondere wirtschaftlicher Art, Rechnung getragen wird. Selbstverständlich wird der gesamte Betrieb, also sowohl die Förderung und Bereitstellung der entspechenden Warenaufnahmen wie auch der Kommisonierbetrieb der Artikel im entsprechenden Lager und deren Bereitstellung und Übergabe von einer entsprechenden Steuerungseinrichtung in Form einer Datenverarbeitungsanlage oder der gleichen gesteuert. Die Übergabestellen selbst werden zweckmäßigerweise in Form von entsprechenden Transportbändern gebildet, die an der entsprechenden Stelle auf die ebenfalls von einem Förderband oder der gleichen gebildete Transportstrecke treffen, so daß dort die Artikel übergeben werden können.

Da die einzelnen Aufträge letztlich wahllos eingehen, ergeben sich mit unter bei ungünstiger Auftragsabfolge Bearbeitungsverzögerungen, wenn die zu übergebenden Artikel in ungünstiger Verteilung an den Übergabestellen bereitgehalten werden. Um dem zu begegnen kann erfindungsgemäß fernen vorgesehen sein, daß mittels einer Steuerungseinrichtung die innerhalb einer vorgegebenen Zeit abzuarbeitenden Aufträge und/oder eine vorgegebene Anzahl von abzuarbeitenden Aufträgen zur Ermöglichung einer zeit - und/oder durchsatzoptimierten Bearbeitung sortiert werden und der Bereitstellungsbetrieb der Warenaufnahmen und der Waren an den Übergabestellen entsprechend gesteuert wird. Gemäß dieser Erfindungsgestaltung werden also die eingehenden Aufträge bzw. ein entsprechendes Auftragsvolumen sortiert und in eine Reihenfolge gebracht, die einen im wesentlichen kontinuierlichen Arbeitsbetrieb ermöglichen. Der Steuerungseinrichtung ist bekannt, an welchen Übergabestellen die jeweiligen einen Auftrag bildenden Waren bereitgestellt werden, so daß letztlich abhängig von dieser Kenntnis die Aufträge zur Optimierung geordnet werden können.

Da wie beschrieben sowohl Singleaufträge als auch mehrere Artikel umfassende Aufträge bearbeitet werden können, hat es sich als zweckmässig erwiesen, wenn erfindungsgemäß die Größe und/oder Art der jeweiligen anfänglich transportierten und der eingeschleusten Warenaufnahmen in Abhängigkeit des jeweiligen Auftrags bzw. der jeweiligen Warengruppe gewählt werden, wobei dies selbstverständlich über die übergeordnete Steuerungseinrichtung erfolgt. Als vorteilhaft hat es sich ferner erwiesen, wenn erfindungsgemäß sämtlliche Warenaufnahmen in einem gemeinsamen Warenaufnahmereservoir bereitgehalten und von dort im Bedarfsfall abgezogen werden, so daß hierdurch sichergestellt ist, daß stets eine entsprechende Anzahl von Warenaufnahmen vorhanden und einschleusbar ist. Dabei sollte vorteilhaft das Warenaufnahmereservoir im wesentlichen gleichmäßig mit den in ihrer Art/Größe unterschiedlichen Warenaufnahmen belegt sein.

Schließlich hat es sich ferner als zweckmässig erwiesen, wenn die in entsprechende Lücken einzuschleusenden Warenaufnahmen vor dem Einschleusen in einem Pufferspeicher gespeichet werden.

Neben dem Verfahren betrifft die Erfindung ferner eine Anlage zum Zusammenstellen auftragsspezifischer Warengruppen, die zur Durchführung des Verfahrens geeignet ist, wobei es sich hier insbesondere um eine Kommissionieranlage handeln kann. Diese weist eine Teilstrecke zum Transportieren von Warenaufnahmen entlag mehrerer Übergabestellen, an denen die auftragsspezifischen Waren bereitstellbar und an die Warenaufnahmen übergebbar sind auf, wobei die Waren eines Auftrags an einen oder mehreren Übergabestellen bereitgestellt und übergeben werden können. Erfindungsgemäß zeichnet sich die Anlage dadurch aus, daß eine an einer Übergabestelle komplettierte Warenaufnahme mittels eines Ausschleusmittels an eine Ausschleustransportstelle ausschleusbar ist, und daß in die innerhalb der Transportstrecke entstandene Lücke oder in eine aus der gleichzeitigen Behandlung mehrerer Warenaufnahmen resultierende Lücke mittels eines Einschleusmittels eine neue Warenaufnahme einschleusbar ist, der ein Auftrag zugeordnet ist, dessen Waren an einer oder mehreren nachfolgenden Übergabestellen bereitstellbar und übergebbar sind, wobei naturgemäß entsprechende Mittel zum Ein- und Ausschleusen vorgesehen sind.

Mittels einer erfindungsgemäß vorhandenen Steuerungseinrichtung ist es zweckmässig möglich, die innerhalb einer vorgegebenen Zeit abzuarbeitenden Aufträge und/oder eine vorgegebene Anzahl von abzuarbeitenden Aufträgen zur Ermöglichung einer zeit-und/oder durchsatzoptimierten Bearbeitung zu sortieren, wobei der Bereitsstellungsbetrieb der Warenaufnahmen und der Waren an den Übergabestellen entsprechend steuerbar ist. Zum Einschleusen der einzelnen Warenaufnahmen sind erfindungsgemäß zumindestens einem Teil der Übergabestellen eine entsprechene Einschleusstelle zugeordnet, wobei zweckmässigerweise erst nach der zweiten Übergabestelle die entsprechenden Einschleusstellen zugeordnet sein sollten, da die Warenaufnahmen, die an die erste Übergabestelle längs der Transportstrecke gefördert werden, bereits entsprechend verdichtet angefördert werden können. Erfindungsgemäß kann dabei jede Einschleusstelle als Pufferspeicher ausgebildet werden sein, zweckmäßigerweise in Form einer entsprechend lang ausgelegten Förderstrecke.

Als vorteilhaft zur Ermöglichung einer kontinuierlichen Nachlieferung entsprechender Warenaufnahme kann erfindungsgemäß ein Warenaufnahmereservoir vorgesehen sein, in dem die entlang der Transportstrecke behandelbaren Warenaufnahmen bereitgehalten sind und aus dem sie im Bedarfsfall abziehbar sind. Dabei kann das Warenaufnahmereservoir zweckmässigerweise als Förderkreislauf mit einem entsprechenden Förderband oder der gleichen ausgebildet sein. Die Einschleisstellen, z.B. in Form der Förderstrecke, sind mit dem Förderkreislauf verbunden, so daß die Aufnahmen an die Einschleisstellen abgegeben werden können. Zur weiteren Automatisierung können erfindungsgemäß dem Warenaufnahmereservoir, ggf. dem Förderkreislauf Einrichtungen zum Vorbereiten der Warenaufnahmen in Form Kartonaufrichter, Wannenentstaplereinrichtungen oder der gleichen zugeordnet sein.

Zur Vermeidung etwaiger Kollisionen der ausgeschleusten Warenaufnahmen kann die Ausscheustransportstrecke erfindungsgemäß als Schrägrollenförderer ausgebildet sein, der es ermöglicht, die ausgeschleusten Warenaufnahmen um ein bestimmtes Stück von der Transportstrecke seitwärts abzufördern. Schließlich kann die Steuerungseinrichtung zum Auswählen der Größe und/oder Art der jeweiligen anfänglich transportierbaren und einschleusbaren Warenaufnahmen in Abhängigkeit des jeweiligen Auftrags bzw. der jeweiligen Warengruppe ausgebildet sein.

Weitere Vorteile, Merkmale und Einzelheiten der Erfindung ergeben sich aus den im folgenden beschriebenen Ausführungsbeispielen sowie an Hand der Zeichnungen. Dabei zeigen:
- Fig. 1: eine Prinzipsskizze zur Darstellung einer erfindungsgemässen Anlage,
- Fig. 2: eine Prinzipsskizze zur Darstellung einer Betriebssituation,
- Fig. 3-6: Prinzipsskizzen für die kontinuierliche schrittweise Abarbeitung mehrerer Aufträge, ausgehend von der Situation gemäß Figur 2, und
- Fig. 7: eine Prinzipsskizze mehrerer Einschleusvarianten.

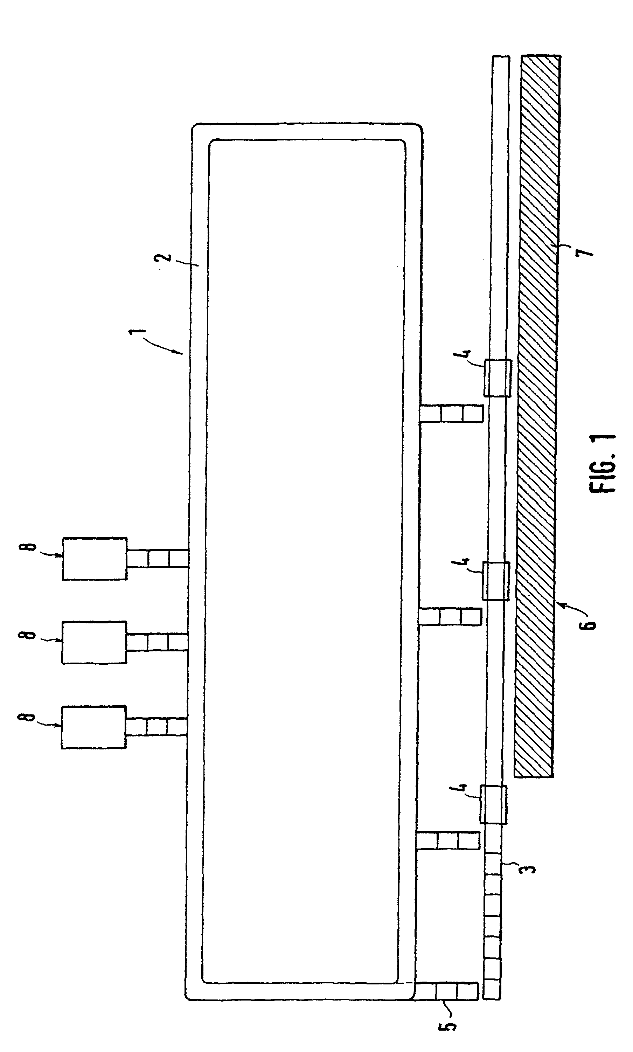

Fig. 1 zeigt in einer Prinzipskizze eine erfindungsgemäße Anlage zum Zusammenstellen entsprechender Warengruppen. Diese besteht aus einem Warenaufnahmereservoir 1 in Form eines Förderkreislaufs 2, auf dem, wie in den nachfolgenden Figuren gezeigt entsprechende Warenaufnahmen umgefördert werden. Diesem zugeordnet ist eine Transportstrecke 3, welche längs mehrerer Übergabestellen 4 verläuft. Auf die Transportstrecke 3 werden an einer Aufgabestelle 5 die entsprechenden Warenaufnahmen anfänglich aufgegeben. Die jeweiligen Warenaufnahmen passieren die entsprechenden Übergabestellen 4 an denen die einzelnen den Auftrag bildenden Waren bzw. Artikel an die Warenaufnahmen übergeben werden. Diese Artikel werden zuvor in einem nicht gezeigtem Lager auftragsspezifisch kommissioniert und über nicht gezeigte Fördermittel an die entsprechende Übergabestelle 4 transportiert. Sofern es sich nicht um eine Singlebestellung handelt, ist es möglich, daß die einen Auftrag bildenden Artikel über mehrere Übergabestellen verteilt bereitgehalten werden, d.h. die jeweilige Warenaufnahme muß die entsprechenden Übergabestellen zwangsläufig abfahren. Die gesamte Anlage wird über eine nicht näher gezeigte Steuerungseinrichtung entsprechend gesteuert. Der Transportstrecke 3 ist eine parallellaufende Ausschleusförderstrecke 6 in Form eines Schrägrollenförderers 7 zugeordnet. Auf diesem Schrägrollenförderer werden die von der Transportstrecke 3 nach Passieren einer entsprechenden Übergabestelle 4, an welcher die jeweilige Warengruppe komplettiert wurde, ausgeschleusten Warenaufnahme abtransportiert. Fig.1 1 zeigt schließlich noch die dem Förderkreislauf 2 zugeordneten Einrichtungen 8 zur Vorbereitung der entsprechenden Warenaufnahmen. Hierbei kann es sich um Kartonaufrichter, Wannenentstabler oder dergleichen handeln.

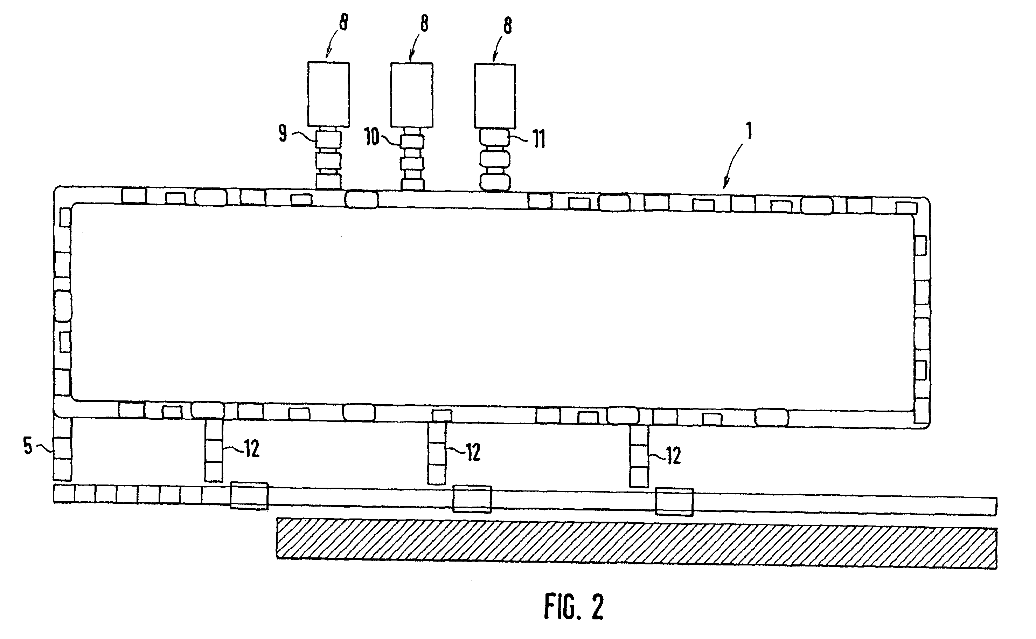

Einen Betriebsfall der erfindungsgemäßen Anlage zeigt Fig. 2, wobei hier lediglich die Beschickung des Förderkreislaufs 1 gezeigt ist. Jede dieser Einrichtungen 8 bereitet eine entsprechende Warenaufnahme 9, 10, 11 vor. Hierbei kann es sich um Kartons, Wannen oder dgl. handeln. Diese werden in entsprechende Lücken auf dem Förderkreislauf 1 eingeschleust und laufen um, sofern sie nicht vorher entweder an der Aufgabestelle 5 oder einer der Einschleusstellen 12 vom Förderkreislauf 1 abgezogen werden. Die Einschleusstellen 12 sind als einen Puffer bildende Förderstrecke ausgebildet, die mit dem Förderkreislauf in Verbindung stehen. Selbstverständlich sind an den entsprechenden Stellen geeignete Mittel zum Bewegen/Wechseln der Warenaufnahmen auf den jeweils nachfolgenden Förderabschnitt vorgesehen, die nicht näher beschrieben sind.

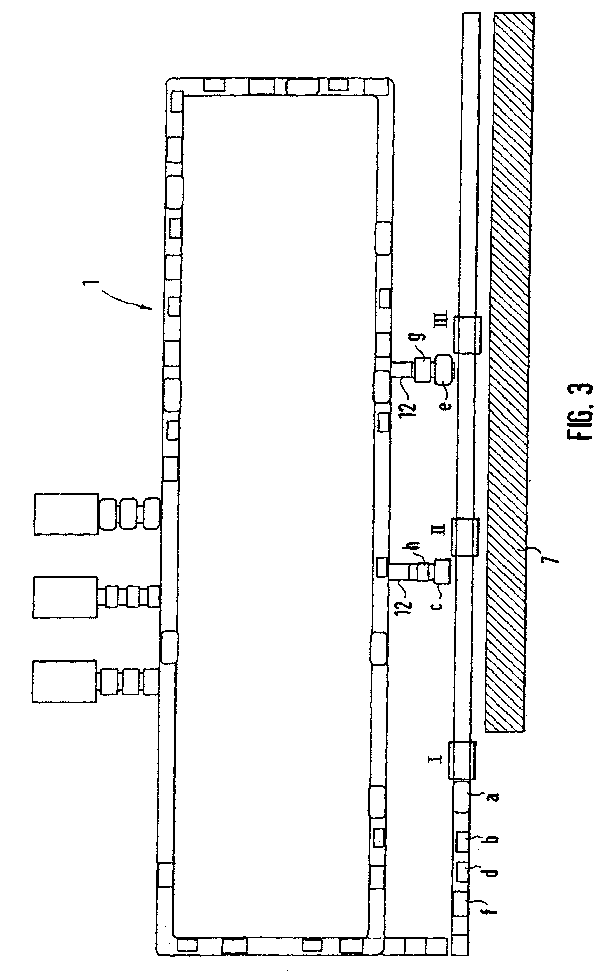

Die Figuren 3 bis 6 zeigen ein Beispiel für den tatsächlichen Betrieb der Anlage. Es sei angenommen, daß folgendes Auftragsschema zugrundeliegt:

| Beispielauftragsdatei | | |
|---|---|---|
| **Auftragnummer** | **Übergabestellen** | **Warenaufnahme** |
| Auftrag 1 | I, III | W |
| Auftrag 2 | III | 1 |
| Auftrag 3 | II, III | 1 |
| Auftrag 4 | I, II | 2 |
| Auftrag 5 | III | W |
| Auftrag 6 | II, III | 2 |
| Auftrag 7 | I | 2 |
| Auftrag 8 | I, II | 1 |

Mit: I, II, III = lokale Übergabestelle
1,2,W = Behälterart, (Kartongröße 1,2oder Wanne)

Zunächst wird seitens der Steuerungseinrichtung das Auftragsvolumen entsprechend sortiert, um eine Auftragsfolge zu bilden, die einen optimierten Durchsatz bei hohem Auslastungsgrad ermöglicht. Die o.g. Aufträge 1-8 werden wie folgt sortiert:

| Abarbeitungsdatei | | | |
|---|---|---|---|
| **Auftragnummer** | **Übergabestellen** | **Warenaufnahme** | **zugeord. Warenaufnahme** |
| Auftrag 1 | I, III | W | a |
| Auftrag 7 | I | 2 | b |
| Auftrag 3 | II, III | 1 | c |
| Auftrag 4 | I, II | 2 | d |
| Auftrag 5 | III | W | e |
| Auftrag 8 | I, II | 1 | f |
| Auftrag 2 | III | 1 | g |
| Auftrag 6 | II, III | 2 | h |

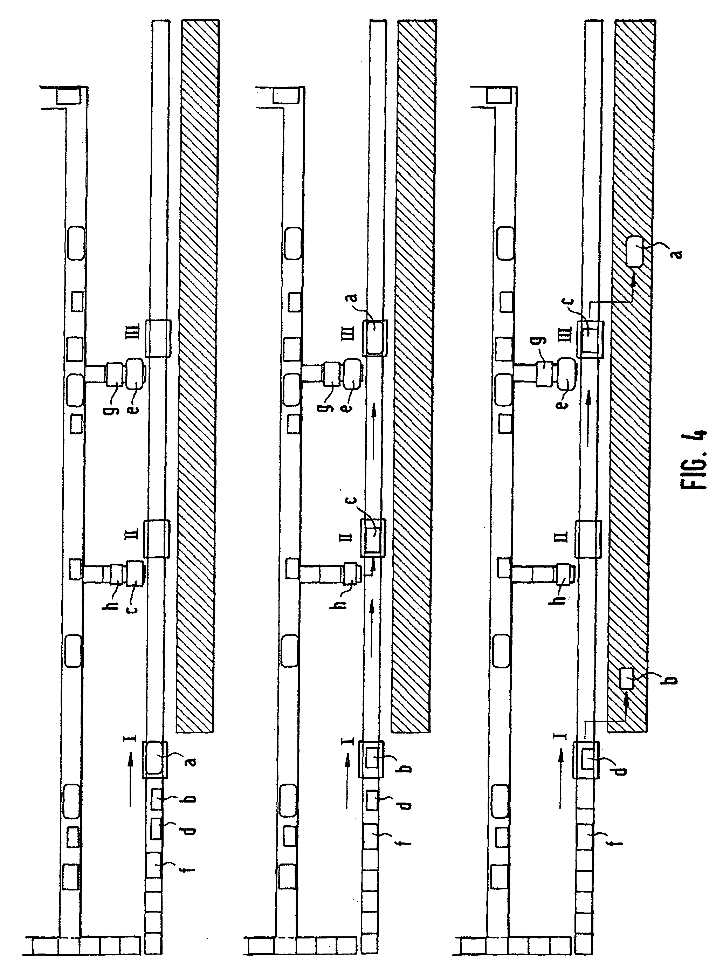

Anhand der obigen Abarbeitungsfolge werden zunächst die einzelnen Warenaufnahmen für die jeweiligen Aufträge in die zugehörigen, entsprechenden Pufferplätze bildenden Einschleusstellen 12 bzw. die der Übergabestelle I vorgeschalteten Transportstrecke eingelagert. Dieser Vorgang erfolgt zweckmässigerweise dynamisch, daß heißt, sobald ein Platz frei wird, wird sofort die nächste benötigte Warenaufnahme eingebracht. Ausgehend von der obigen Autragsabfolge wird zunächst die Warenaufnahme a an die Übergabestelle I gefördert und dort befüllt. Anschließend erfolgt ein Weitertransport zur Übergabestelle III, wo die restlichen Waren, die den Auftrag 1 bilden bereitgestellt werden, daß heißt, dort wird also der Auftrag kompletiert. Nachdem die Warenaufnahme a die Übergabestelle l verlassen hat, fährt die Warenaufnahme b in die Übergabestelle I und wird dort befüllt. Da während des Einfahrens das Befüllen der Warenaufnahme b in die Übergabestelle I die Warenaufnahme a bis zur Übergabestelle III gefördet wird, bildet sich zwischen diesen beiden Warenaufnahmen eine Lücke ab der Übergabestelle II. In diese, (vgl. Fig. 4 mittige Abbildung), wird die Warenaufnahme c eingeschleust, die dem Auftrag 3 zugeordnet ist, der an den Übergabestellen II und ||| abzuarbeiten ist. Eine Kollision mit der Warenaufnahme b ist ausgeschlossen, da, vgl. Fig. 4 untere Abbildung, die Warenaufnahme b an die Übergabestelle l komplettiert ist und ausgeschleust wird. Die den Auftrag 4 zugeordnete Warenaufnahme d fährt in Übergabestelle I ein. Gleichzeitig wird die Warenaufnahme a an der Übergabestelle III komplettiert und ausgeschleust, vgl. Fig. 4 untere Darstellung. Die Warenaufnahme c wird parallel in die Übergabestelle III, wo sie komplettiert wird, eingefördert.

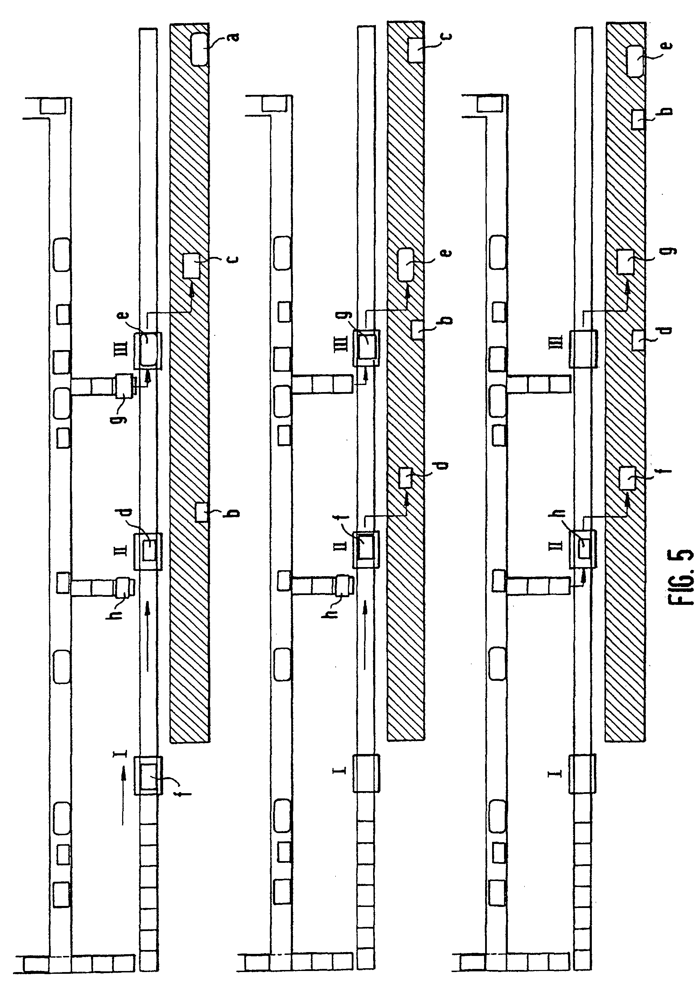

Wie in Fig. 5 in der oberen Darstellung zeigt, wird nach Einbringen der Waren an die Übergabestelle I auf die Warenaufnahme d diese zur Übergabestelle II gefördert, wo sie komplettiert wird, gleichzeitig wird an der Übergabestelle III die Warenaufnahme c ausgeschleust und die Warenaufnahme e, die dem Auftrag 5 entspricht, über die Einschleusstelle eingefördert. In die Übergabestelle l wird die Warenaufnahme f (Auftrag 8) nachgeführt.

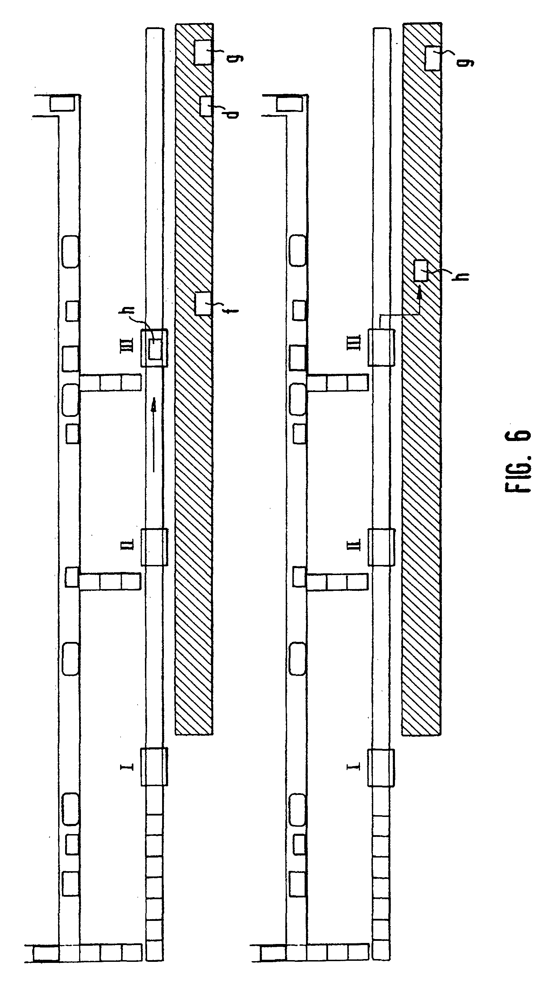

Im weiteren Verlauf (Fig. 5 mittlere Darstellung) wird die an der Übergabestelle lll komplettierte Warenaufnahme e ausgeschleust, gleichzeitig wird die Warenaufnahme g (Auftrag 2) in die Übergabestelle III eingeführt. Die Warenaufnahme d wiederum ist an der Übergabestelle II komplettiert worden und wird dort ausgeschleußt. In diese Lücke wird nahtlos die Warenaufnahme f eingeführt. Wie schließlich Fig. 5 in der unteren Darstellung zu entnehmen ist, wird die Warenaufnahme g infolge ihrer Komplettierung an der Übergabestelle III ausgeschleust, auch die Warenaufnahme f, die an der Übergabestelle II komplettiert ist, wird dort auf die Ausschleusfördereinrichtung aufgegeben. In die Übergabestelle II wird schließlich die Warenaufnahme h, die dem Auftrag 6 zugeordnet ist, eingebracht. Als letzte noch zu bearbeitende Warenaufnahme wird nach Einbringen der an der Übergabestelle II befindlichen Waren die Warenaufnahme h an die Übergabestelle III transportiert und dort nach Komplettierung ausgeschleust, vgl. Fig. 6.

Wie dem Schema der Fig. 3 bis 6 zu entnehmen ist, wird also zum einen eine komplettierte Warenaufnahme unmittelbar nach ihrer Komplettierung ausgeschleust, zum anderen wird in die sich hierdurch bildende Lücke - sofern möglich - sofort eine neue, an den nachfolgenden Befüllpunkten noch komplettierbare Warenaufnahme eingeschleust. Daneben können Warenaufnahmen auch in Lücken, die sich durch die gleichzeitige Behandlung mehrerer Warenaufnahmen bilden, eingeschleust werden. Es ist darauf hinzuweisen, daß in dem gezeigten Beispiel keine neuen Warenaufnahmen in die entsprechenden Einschleusbereiche nachgeführt werden. Im Realfall ist dies jedoch selbstverständlich der Fall, naturgemäß abhängig von der jeweiligen Anlagensteuerung.

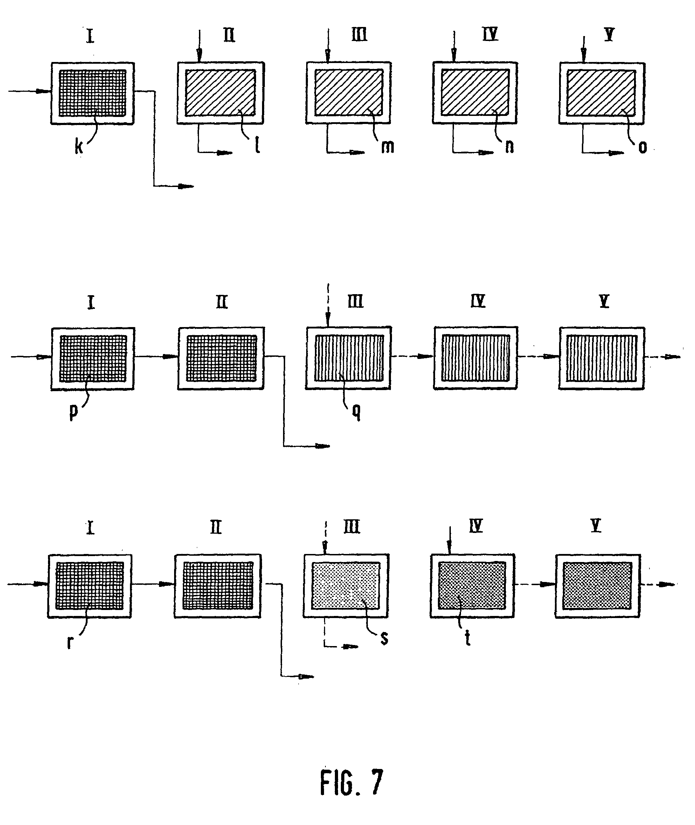

Schließlich zeigt Fig. 7 drei verschiedene Fallbeispiele für den Einschleußbetrieb, wobei hier zwischen Warenaufnahmen unterschieden wird, die entweder Singleaufträgen oder Mehrartikelaufträgen zugeordnet sind. Betrachtet wird jeweils die Transportstrecke mit den Übergabestellen, wobei hier fünf Übergabestellen I-V vorgesehen sind. Im oberen in Fig. 7 gezeigten Fallbeispiel wird davon ausgegangen, daß die Warenaufnahme k an der Übergabestelle I komplettiert und ausgeschleust wird. Für die Übergabestellen II-V ist es nun möglich, jeweils einem Singleauftrag zugeordnete Warenaufnahme l,m,n,o einzuschleusen, die an der jeweiligen Übergabestelle komplettiert und unmittelbar danach wieder ausgeschleust werden. Es kommt zu keinem Zeitpunkt zu einer Lückenbildung, der Durchsatz kann gesteigert werden.

In der in Fig. 7 mittig gezeigten Prinzipskizze wird in der Übergabestelle I eine Warenaufnahme p eingebracht, die mehreren Artikeln zugeordnet ist und die erst an der Übergabestelle ll komplettiert und ausgeschleust wird. In die hierdurch erzeugte, ab Übergabestelle III entstehende Lücke wird ebenfalls eine mehrere Artikel aufnehmende Warenaufnahme q eingeschleust, die im gezeigten Beispiel mehrere nachfolgende Übergabestellen durchläuft und erst zu einem späteren Zeitpunkt ausgeschleust wird.

Schließlich ist in der unteren Darstellung in die Übergabestelle I ebenfalls eine mehreren Artikeln zugeordnete Warenaufnahme r eingebracht, die ebenfalls in Übergabestelle ll komplettiert wird. In die nachfolgende, ab Übergabestelle III bestehende Lücke wird eine einem Singleauftrag zugeordnete Warenaufnahme s eingebracht, die unmittelbar danach wieder ausgeschleust wird. In die Übergabestelle IV hingegen wird eine einer mehrere Artikel umfassenden Warengruppe zugeordnete Warenaufnahme t eingebracht, die bis zum Ausschleusen mehrere Übergabestellen durchläuft.

Wie bereits beschrieben, erfolgt die Steuerung vorzugsweise mittels einer übergeordneten Steuerungseinrichtung. Diese kommuniziert zweckmässigerweise mittels einer die lagerseitige Warenkommission steuernden Steuerungseinrichtung. Ergeben sich nun Schwierigkeiten auf der Kommissionierseite, wird dies der entsprechenden Steuerungseinrichtung gemeldet, die beispielsweise bei fehlendem Artikel die vorher erzeugte "Abarbeitungsfolge" der Aufträge aufhebt und die nichtbearbeitbaren Aufträge auslagert. Anschließend wird aus den verbleibenden Aufträgen des ursprünglichen Auftragsvolumens eine neue Abarbeitungsfolge erzeugt. Etwaige aus dem Artikelmangel resultierende fehlerhaft zusammengestellte Warenaufnahmen werden entsprechend markiert und in eine lokale Fehlerbearbeitung gebracht. Ist der Fehler behoben, wird dies ebenfalls der übergeordneten Steuerungseinrichtung mitgeteilt, die sofort die Auftragsabfolge wieder entsprechend sortiert.

## Patentansprüche

1. Verfahren zum Betrieb einer Anlage zum Zusammenstellen auftragsspezifischer Warengruppen, insbesondere einer Kommissionieranlage, mit folgenden Merkmalen:
a) den einzelnen Aufträgen sind Warenaufnahmen zugeordnet,
b) die Warenaufnahmen werden längs einer Transportstrecke an mehreren Übergabestellen vorbeitransportiert, an denen die auftragsspezifischen Waren bereitgestellt und an die Warenaufnahmen übergeben werden, wobei die Waren eines Auftrags an einer oder mehreren Übergabestellen übergeben werden können,
c) unmittelbar nach Komplettierung einer Warengruppe an einer Übergabestelle wird die jeweilige Warenaufnahme zur weiteren Bearbeitung ausgeschleust,
d) in die innerhalb der Transportstrecke entlang der Übergabestellen entstandene Lücke oder in eine aus der gleichzeitigen Behandlung mehrerer Warenaufnahmen resultierenden Lücke wird eine neue Warenaufnahme eingeschleust, der ein Auftrag zugeordnet ist, dessen Waren an einer oder mehreren nachfolgenden Übergabestellen bereitgestellt und übergeben werden.

2. Verfahren nach Anspruch 1, **dadurch gekennzeichnet, daß** mittels einer Steuerungseinrichtung die innerhalb einer vorgegebenen Zeit abzuarbeitenden Aufträge und/oder eine vorgegebene Anzahl von abzuarbeitenden Aufträgen zur Ermöglichung einer zeit- und/oder durchsatzoptimierten Bearbeitung sortiert werden, und der Bereitstellungsbetrieb der Warenaufnahmen und der Waren an den Übergabestellen entsprechend gesteuert wird.

3. Verfahren nach Anspruch 1 oder 2, **dadurch gekennzeichnet, daß** die Größe und/oder Art der jeweiligen anfänglich transportierten und eingeschleusten Warenaufnahme in Abhängigkeit des jeweiligen Auftrags bzw. der jeweiligen Warengruppe gewählt werden.

4. Verfahren nach einem der vorangehenden Ansprüche, **dadurch gekennzeichnet, daß** sämtliche Warenaufnahmen in einem gemeinsamen Warenaufnahmenreservoir bereitgehalten und von dort im Bedarfsfall abgezogen werden.

5. Verfahren nach einem der vorangehenden Ansprüche, **dadurch gekennzeichnet, daß** die in entsprechende Lücken einzuschleusenden Warenaufnahmen vor dem Einschleusen in einem Pufferspeicher gespeichert werden.

6. Anlage zum Zusammenstellen auftragsspezifischer Warengruppen zur Durchführung des Verfahrens nach den Ansprüchen 1 bis 5, insbesondere Kommissionieranlage, mit einer Transportstrecke zum Transportieren von Warenaufnahmen entlang mehrere Übergabestellen, an denen die auftragsspezifischen Waren bereitstellbar und an die Warenaufnahmen übergebbar sind, wobei die Waren eines Auftrags an einer oder mehreren Übergabestellen bereitgestellt und übergeben werden können, **dadurch gekennzeichnet, daß** eine an einer Übergabestelle (4, l, ll, lll, lV, V) komplettierte Warenaufnahme (9, 10, 11, a - h, k - t) mittels eines Ausschleusmittels an eine Ausschleustransportstrecke (6) ausschleusbar ist, und daß in die innerhalb der Transportstrecke (3) entstandene Lücke oder in eine aus der gleichzeitigen Behandlung mehrerer Warenaufnahmen resultierende Lücke mittels eines Einschleusmittels eine neue Warenaufnahme eingeschleusbar ist, der ein Auftrag zugeordnet ist, dessen Waren an einer oder mehreren nachfolgenden Übergabestellen bereitstellbar und übergebbar sind.

7. Anlage nach Anspruch 6, **dadurch gekennzeichnet, daß** eine Steuerungseinrichtung vorgesehen ist, mittels welcher die innerhalb einer vorgegebenen Zeit abzuarbeitenden Aufträge und/oder eine vorgegebene Anzahl von abzuarbeitenden Aufträgen zur Ermöglichung einer zeit- und/oder durchsatzoptimierten Bearbeitung sortierbar sind, wobei der Bereitstellungsbetrieb der Warenaufnahmen und der Waren an den Übergabestellen entsprechend steuerbar sind.

8. Anlage nach Anspruch 6 oder 7, **dadurch gekennzeichnet, daß** zumindest einem Teil der Übergabestellen (4, l, II, III, IV, V) eine Einschleusstelle (12) für die Warenaufnahmen zugeordnet ist.

9. Anlage nach Anspruch 8, **dadurch gekennzeichnet, daß** jede Einschleusstelle (12) als Pufferspeicher ausgebildet ist.

10. Anlage nach einem der Ansprüche 6 bis 9, **dadurch gekennzeichnet, daß** ein Warenaufnahmereservoir (1) vorgesehen ist, in dem die entlang der Transportstrecke (3) behandelbaren Warenaufnahmen (9, 10, 11) bereitgehalten sind und aus dem sie im Bedarfsfall abziehbar sind.

11. Anlage nach Anspruch 10, **dadurch gekennzeichnet, daß** das Warenaufnahmereservoir (1) als Förderkreislauf (2) ausgebildet ist.

12. Anlage nach Anspruch 10 oder 11, **dadurch gekennzeichnet, daß** dem Warenaufnahmereservoir (1), gegebenenfalls dem Förderkreislauf (2) Einrichtungen (8) zum Vorbereiten der Warenaufnahmen (9, 10, 11) in Form von Kartonaufrichteinrichtungen, Wannenentstapeleinrichtungen o.dgl. zugeordnet sind.

13. Anlage nach einem der Ansprüche 6 bis 12, **dadurch gekennzeichnet, daß** die Ausschleustransportstrecke (6) als Schrägrollenförderer (7) ausgebildet ist.

14. Anlage nach einem der Ansprüche 6 bis 13, **dadurch gekennzeichnet, daß** die Steuerungseinrichtung zum Auswählen der Größe und/oder Art der jeweiligen anfänglich transportierbaren und eingeschleusbaren Warenaufnahmen in Abhängigkeit des jeweiligen Auftrags bzw. der jeweiligen Warengruppe ausgebildet ist.

## Claims

1. Method of operating apparatus for assembling order-specific groups of goods, in particular picking apparatus, having the following features:
a) goods containers are allocated to individual orders,
b) the goods containers are conveyed along a conveyor section past plural transfer points at which the order-specific goods are made ready and transferred to the goods containers, wherein the goods of one order can be transferred to one or more transfer points,
c) directly after completion of a group of goods at one transfer point, the respective goods container is ejected for further processing,
d) into the gap formed in the transport section along the transfer points or into a gap resulting from the simultaneous handling of plural goods containers, a new goods container is slotted in, to which an order is allocated whose goods are made ready and transferred.

2. Method according to claim 1, **characterised in that** by means of a control device the orders to be processed within a specified time and/or a specified number of orders to be processed in order to permit time- and/or throughput-optimised processing are sorted, and the making ready of goods containers and goods at the transfer points is controlled accordingly.

3. Method according to claim 1 or 2, **characterised in that** the size and/or type of the respectively initially conveyed and inserted goods container is selected according to the respective order or respective group of goods.

4. Method according to one of the preceding claims, **characterised in that** the entirety of the goods containers is kept ready in a common reservoir and is removed therefrom as needed.

5. Method according to one of the preceding claims, **characterised in that** the goods containers to be slotted into corresponding gaps are stored before slotting in in a buffer store.

6. Apparatus for assembling order-specific groups of goods for carrying out the method according to claims 1 to 5, in particular picking apparatus, having a conveying section for conveying goods containers along plural transfer points, at which the order-specific goods can be made ready and transferred to the goods containers, the goods of one order being capable of being made ready and transferred at one or more transfer points, **characterised in that** a goods container (9, 10, 11, a-h, k-t) completed at a transfer point (4, l, ll, lll, IV, V) is ejectable by means of an ejecting means to an ejection conveyor section (6), and **in that** into the gap arising within the conveyor section (3) or into the gap resulting from the simultaneous handling of plural goods containers a new goods container can be slotted in by means of a slotting in means, to which an order is allocated, whose goods can be made ready and transferred at one or more of the following transfer points.

7. Apparatus according to claim 6, **characterised in that** a control device is provided, by means of which the orders to be processed within a specified time and/or a specifiable number of orders to be processed are sortable to permit time- and/or throughput-optimised processing, in which case the making ready of goods containers and goods at the transfer points is controllable accordingly.

8. Apparatus according to claim 6 or 7, **characterised in that** at least some of the transfer points (4, l, ll, III, IV, V) are allocated a slotting-in point (12) for the goods containers.

9. Apparatus according to claim 8, **characterised in that** each insertion point (12) is formed as a buffer store.

10. Apparatus according to one of claims 6 to 9, **characterised in that** a goods container reservoir (1) is provided, in which goods containers (9, 10, 11) handled along the conveying section (3) are kept ready and from which they can be removed as needed.

11. Apparatus according to claim 10, **characterised in that** the goods container reservoir (1) is formed as a conveying circuit (2).

12. Apparatus according to claim 10 or 11, **characterised in that** devices (8) for preparing the goods containers (9, 10, 11) in the form of box assembling devices, pan unstacking devices or the like are allocated to the goods container reservoir (1), optionally to the conveying circuit (2).

13. Apparatus according to one of claims 6 to 12, **characterised in that** the ejection conveyor section (6) is formed as a sloping roller conveyor (7).

14. Apparatus according to one of claims 6 to 13, **characterised in that** the control device for selecting the size and/or type of respective goods containers initially capable of being transported and slotted in is formed according to the respective order or group of goods.

## Revendications

1. Procédé pour faire fonctionner une installation de groupage d'ensembles d'articles spécifiés sur commande, en particulier une installation de commissionnement, procédé présentant les caractéristiques suivantes:
a) aux ordres individuels sont attribués des prélèvements d'articles,
b) les prélèvements d'articles sont acheminés le long d'un trajet de transport jusqu'à plusieurs points de livraison auxquels les articles spécifiquement commandés sont préparés et livrés aux points de prélèvement d'articles, les articles d'une commande pouvant être livrés à un ou plusieurs points de livraison,
c) directement après achèvement d'un groupage d'articles en un point de livraison, chaque prélèvement d'articles est extrait en vue d'un traitement ultérieur,
d) dans les vides créés le long des points de livraison à l'intérieur du trajet de transport ou dans un vide résultant d'un traitement simultané de plusieurs prélèvements d'articles, est inséré un nouveau prélèvement d'articles, qui est attribué à une commande et dont les articles sont préparés et livrés en un ou plusieurs points de livraison suivants.

2. Procédé selon la revendication 1, **caractérisé en ce qu'**un système de pilotage rend possible, sur une durée prédéterminée, une classification à un rythme de traitement optimisé et le pilotage d'articles jusqu'aux points de livraison correspondants à des commandes à traiter et/ou d'un nombre prédéterminé de commandes à traiter.

3. Procédé selon la revendication 1 ou la revendication 2, **caractérisé en ce que** les dimensions et/ou la nature de chaque prélèvement d'articles initialement transporté et inséré sont sélectionnées en fonction de chaque commande, à savoir de chaque groupe d'articles.

4. Procédé selon l'une des revendications précédentes, **caractérisé en ce que** divers prélèvements d'articles sont conservés dans une réserve commune de prélèvement d'articles et, de là, extraits en cas de besoin.

5. Procédé selon l'une quelconque des revendications précédentes, **caractérisé en ce que** les prélèvements d'articles à insérer dans des vides correspondants sont stockés avant insertion dans un volume tampon.

6. Installation pour le regroupage de groupes d'articles correspondant à des commandes spécifiques en vue de la mise en oeuvre du procédé selon les revendications 1 à 5, en particulier installation de commisionnement, du type comportant un trajet de transport pour le transport de prélèvements d'articles le long de plusieurs points de livraison, auxquels les articles spécifiés sur commande peuvent être préparés et livrés aux points de prélèvement, les articles d'une commande pouvant être préparés et livrés en un ou plusieurs points de livraison, **caractérisée en ce qu'**un prélèvement d'articles (9, 10, 11 a-h, k-t) achevés en un point de livraison (4, l, ll, III, IV, V) peut être extrait au moyen d'un système d'extraction sur un trajet de transport d'extraction (6) et **en ce que**, dans le vide qui en résulte à l'intérieur du trajet de transport (3) ou dans un vide résultant du traitement simultané de plusieurs prélèvements d'articles au moyen d'un système d'insertion, un nouveau prélèvement d'articles attribué à une commande, peut être introduit, dont les articles peuvent être préparés et livrés en un ou plusieurs points de livraison suivants.

7. Installation selon la revendication 6, **caractérisée en ce qu'**il est prévu un système de pilotage au moyen duquel, sur une période de temps prédéterminée, des commandes à traiter et/ou un nombre prédéterminé de commandes à traiter peuvent être classifiées en vue de rendre possible un traitement d'une durée et/ou à un rythme optimisé, le fonctionnement de la mise en place des prélèvements d'articles et des articles aux points de livraison pouvant être piloté de façon correspondante.

8. Installation selon la revendication 6 ou 7, **caractérisée en ce que** au moins à une partie des points de livraison (4, l, ll, III, IV, V) est attribuée un point d'insertion (12) pour les prélèvements d'articles.

9. Installation selon la revendication 8, **caractérisée en ce que** chaque point d'insertion (12) consiste en un volume tampon.

10. Installation selon l'une quelconque des revendications 6 à 9, **caractérisée en ce qu'**il est prévu une réserve (1) de prélèvements d'articles dans laquelle les prélèvements d'articles (9, 10, 11) pouvant être traités le long du trajet de transport (3) sont conservés et peuvent être extraits en cas de besoin.

11. Installation selon la revendication 11, **caractérisée en ce que** la réserve de prélèvements d'articles (1) constitue un circuit d'alimentation (2).

12. Installation selon la revendication 10 ou 11, **caractérisée en ce que**, à la réserve de prélèvements d'articles (1) et, le cas échéant, au circuit d'alimentation (2), sont associés des systèmes (8) destinés à la préparation des prélèvements d'articles (9, 10, 11) sous forme de systèmes d'empilement de cartons, de systèmes d'agrafage de cuves ou analogues.

13. Installation selon l'une quelconque des revendications 6 à 12, **caractérisée en ce que** le trajet de transport d'extraction (6) consiste en un alimenteur à galets obliques (7).

14. Installation selon l'une quelconque des revendications 6 à 13, **caractérisée en ce que** le système de pilotage est conçu en vue de la sélection des dimensions et/ou de la nature de chaque prélèvement d'articles pouvant être initialement transportés et insérés en fonction de chaque commande, à savoir de chaque groupe d'articles.
